# EUROPEAN PATENT SPECIFICATION

(11) **EP 1 661 829 B1**
(45) Date of publication and mention of the grant of the patent: **14.11.2007**
(21) Application number: 04425888.7
(22) Date of filing: 25.11.2004
(51) Int. Cl.: B65G 17/46, B65G 15/44

(54) **Conveyor device, for instance for an automatic packaging machine and relative transport element**
Fördervorrichtung, zum Beispiel für eine automatische Verpackungsmaschine und ein zugehöriges Transportelement
Dispositif de convoyeur, par exemple pour une machine de conditionnement automatique et un élément de transport associé

(43) Date of publication of application: 31.05.2006
(73) Proprietor: CAVANNA S.p.A., I-28077 Prato Sesia Novara (IT)
(72) Inventor: Guidetti, Dario, c/o Cavanna Spa, 28077 Prato Sesia (Novara) (IT)
(74) Representative: Marchitelli, Mauro

(56) References cited:
- WO-A-97/42108
- DE-A1- 4 309 888
- US-A1- 2004 144 627

## Description

The present invention relates to a conveyor device according to the preamble of claim 1 and a conveyor element according to the preamble of claim 18, usable, for instance, in an automatic packaging machine.

An automatic packaging installation usually comprises a plurality of conveyor devices, which may include one or more device able to form product groups. The present invention was developed paying particular attention to the need to provide a conveyor device able to receive groups of products and to feed said groups to a packaging station.

The products in question can be, for example, food products, e.g. confectionery products or dairy products. In some sectors of the food industry, there are specific needs that bear heavily on the design of packaging machines. For example for some applications, in which the treated products are prone to release particles, fragments or crumbs, there is the need to be able rapidly to disassemble and reassemble the main components of the packaging machine in order to clean thoroughly the machine. This is, for example, the case of packaging machines for the dairy industry, where the machine must be cleaned frequently so that it is necessary for the assembly and disassembly of devices used to move the products to be executed rapidly and in simple fashion.

This requirement, however, may clash with the fact that the machine is intended to operate in environments with controlled atmosphere. This means that the operations to assemble and disassemble the components of the machine are usually performed by the same personnel that supervises the normal operation of the machine, without the intervention of maintenance personnel outside the production departments. To avoid disturbing the atmosphere of the production departments, it is also necessary for disassembly and re-assembly operations to be capable of being executed by hand and without using tools, equipment, etc.

The conveyor devices whereto reference is made herein are usually provided with conveying elements (usually called "nibs") which perform a driving action on the products. In particular, to convey in orderly fashion groups formed by a predetermined number of products, the elements in question can be ordered in grip units able to receive and retain respective groups of products. In this case, there is a further need to vary rapidly the dimensions of the grip unit, e.g. to adapt the conveyor to the packaging of groups constituted by a different number of products.

Even when dealing with single conveyance elements, in general it is desired to be able to vary the distance that separates successive elements in order to be able to operate on products of different sizes, performing the operation currently called "format change".

The best prior art is described in document WO 97/42108 A.

The object of the present invention is to provide a conveyor device which allows to meet all the aforesaid requirements.

According to the present invention, said object is achieved by a conveyor device having the characteristics set out in claim 1. The invention also autonomously relates to a corresponding conveyor element according to claim 18.

The claims are an integral part of the technical teaching provided herein in relation to the invention.

A part of the preferred embodiment of the invention is constituted by a conveyor device comprising a flexible conveyor member capable of advancing in a given direction of conveyance and product conveyor elements associated to the flexible conveyor member to act in conveying relationship with the products in said given direction; the conveyor elements can be selectively engaged and disengaged with respect to said flexible conveyor member in a plug and socket relationship.

This expression is intended here summarily to indicate the situation in which the conveyor elements are capable of being engaged and disengaged relative to the conveyor member, preferably under friction sliding conditions, simply by gripping them (e.g. with a hand) and then engaging them or extracting them with respect to the conveyor member as if it were a plug (male or female, with one poles or multiple poles) which is then inserted or extracted from a corresponding electric socket.

In preferred fashion, the flexible conveyor member comprises a plurality of engagement formations, so that the members conveying the products can be coupled to the flexible conveyor member in a plurality of different engagement positions. In particularly preferred fashion, the engagement formations in question are distributed in essentially uniform fashion along the development of said flexible conveyor member and form along the development of the flexible conveyor member a continuity of different engagement positions for the conveyor elements. Said conveyor elements can thus be mounted on the flexible conveyor member substantially in any point thereof (the term "substantially" is meant to take into account the discretisation due to the separation pitch between the different engagement positions).

The aforesaid plug and socket engagement relationship is preferably achieved by means of cavities and pin formations able to be engaged in said cavities. Both the cavities and the pin formations able to be engaged in said cavities can be positioned both on the flexible conveyor member and, in complementary fashion, on the conveyor elements.

However, the solution whereby the cavities are positioned on the flexible conveyor member and the pin formations are on the conveyor elements is currently preferred, because it allows to use a toothed structure as a flexible conveyor member, in which the cavities into which are engaged the pin formations borne by the conveyor elements are simply separation cavities between teeth of said toothed structure. For example, the flexible conveyor member can be constituted by a toothed belt, currently available on the market, and the cavities into which the pin formations borne by the conveyor elements are engaged are simply the separation throats between the teeth of the toothed belt.

The possibility to embody the invention using a structure that is currently available commercially such as a toothed belt explains why the invention also relates, in autonomous fashion, to the individual conveyor element.

The present invention shall now be described in detail with reference to the accompanying drawings, provided purely by way of non limiting example, in which:
- Figure 1 is a schematic partial view of a conveyor device according to the present invention,
- Figure 2 is a perspective view of the part indicated by the arrow II in Figure 1,
- Figure 3 is an enlarged scale view according to the line III-III of Figure 1,
- Figures 4, 5 and 6 are respectively a lateral, frontal and plan view of the product conveyor element indicated by the arrow IV in Figure 1,
- Figures 7, 8 and 9 are respectively a lateral, frontal and plan view of the product conveyor element indicated by the arrow VII in Figure 1, and
- Figures 10, 11 and 12 are respectively a cross section, a frontal view and a plan view of the product conveyor element indicated by the arrow VIII in Figure 1.

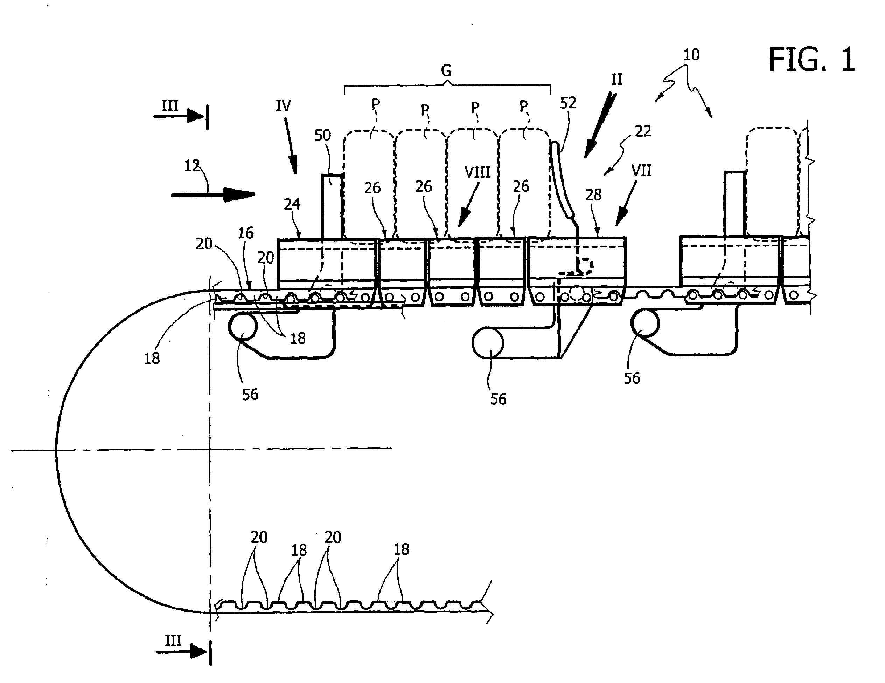

With reference to Figures 1 through 3, the reference number 10 designates a conveyor device according to the present invention. In the embodiment illustrated by way of example herein, the device 10 conveys groups G of products P along a rectilinear direction of conveyance designated by the arrow 12 in Figure 1. In the example illustrated in the figures, the products P are food products with a substantially cylindrical shape with circular base and with two parallel flat faces. Each group G is composed by a plurality of products P positioned with the respective flat faces in mutual contact and with the respective longitudinal axes mutually aligned along a direction that coincides with the rectilinear direction of conveyance 12. The products P can be, for example, dairy products such as small cheeses.

The illustrated arrangement in no way limits the field of application of the present invention. The shape of the products P, the way in which the products are placed close to each other to form a group and the number of products forming each group may vary according to the applications and the product type.

The conveyor 10 feeds successive groups G of products P towards a packaging station in which the individual group G are enclosed in a sheet of packaging material. Each product P could in turn be constituted by a series of items already previously packaged which are enclosed in a group to form a multiple package.

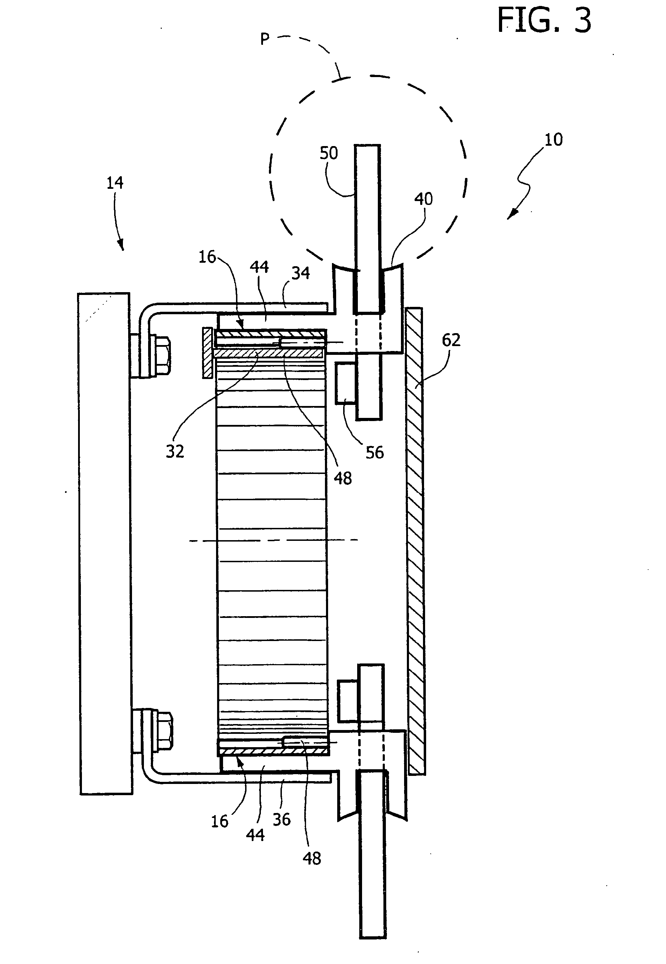

The conveyor 10 comprises a stationary support structure 14 (Figure 3) which bears a motorised flexible conveyor member 16. In the illustrated example, the flexible conveyor member 16 is closed in a loop and it co-operates with at least two pulleys (not shown) at least one of which is motorised. Equivalent actuation solutions are well known to persons skilled in the art.

The flexible conveyor member 16 has at least one rectilinear segment which extends parallel to the direction of conveyance 12. The flexible conveyor member 16 can be constituted by a smooth or toothed belt, by a strip of plastic or metallic material, smooth or with surface etchings, by a chain or by any other transmission member. In the example shown in the figures, the flexible conveyor member 16 is constituted by a toothed belt made of plastic material of a kind available on the market, closed in a loop on a pair of pulleys. The surface of the toothed belt 16 oriented towards the exterior of the loop is smooth, whilst the inner part of the belt 16 is provided with teeth 18, mutually separated by transverse grooves 20 with substantially semi-circular profile. The toothed belt 16 co-operates with a pair of toothed pulleys, one of which is motorised.

The conveyor device 10 comprises a plurality of grip units 22 each of which is destined to receive a respective group G of products P. Each grip unit 22 comprises a plurality of elements for conveying the products 24, 26, 28.

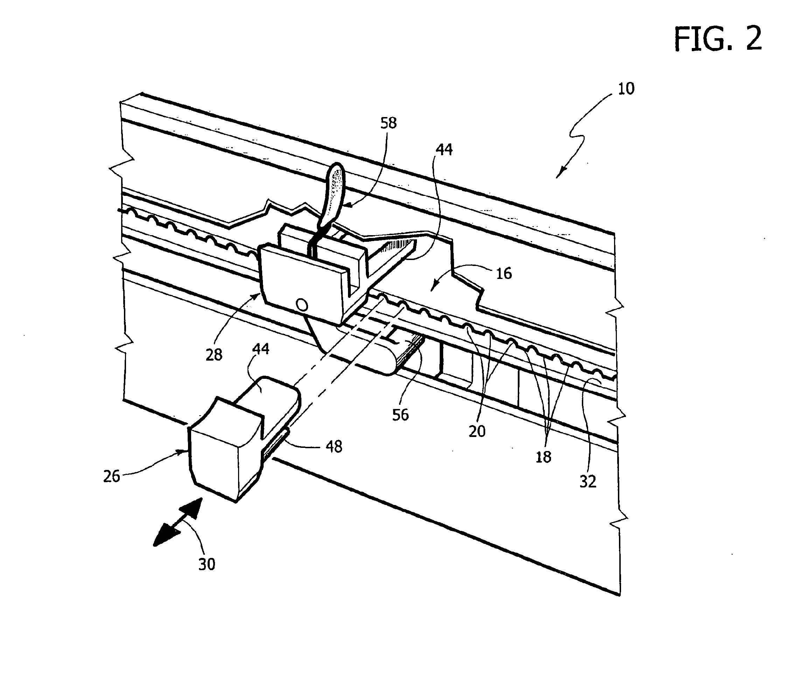

With reference to Figure 2, each product conveyor element (Figure 2 shows only two product conveyor elements, designated by the references 26 and 28) can be coupled and uncoupled with respect to the flexible transport member 16 by sliding in a direction of insertion and removal indicated by the double arrow 30 in Figure 2. The flexible element 16 is elongated in a longitudinal direction and the direction of insertion and removal 30 is preferably transverse relative to said longitudinal direction. The direction of insertion and removal 30 of the product conveyor elements 24, 26, 28 is preferably parallel or substantially parallel to the axes of rotation of the pulleys whereon is wound the flexible conveyor member 16. In other words the direction of insertion and removal 30 is parallel to the outer surface of the conveyor member 16 and orthogonal to the longitudinal direction thereof.

In the condition in which a product conveyor element 24, 26, 28 is coupled to the flexible conveyor member 16, each product conveyor element 24, 26, 28 is fixed relative to the flexible conveyor member 16 in every direction orthogonal to the direction of insertion and removal 30 and is instead free to move away from the flexible conveyor member in the direction of removal.

Preferably, each product conveyor element (24, 26, 28) establishes a sliding coupling with the flexible conveyor member 16. The term "sliding coupling" means a relative connection with such a tolerance as to allow sliding under the action of a force that can be exerted by hand and without using tools. Therefore, each product conveyor element 24, 26, 28 can be coupled and uncoupled by hand with respect to the flexible support member 16 with a movement along a direction that is transverse relative to the conveyor member 16.

With reference to Figures 1 through 3, the stationary support structure 14 comprises a flat and horizontal support structure 32 whereon bears the upper horizontal branch of the flexible conveyor member 16. In particular, the upper surface of the support wall 32 constitutes a sliding surface against which bear the crests of the teeth 18 when the flexible conveyor member is constituted by a toothed belt. The stationary support structure 14 further comprises an upper containment wall 34 parallel to the support wall 32 and distanced by a certain quantity from the upper surface of the flexible transmission member 16. A similar containment wall 36 is positioned below the lower horizontal branch of the flexible conveyor member 16.

With reference to Figure 1, each grip unit 22 is a modular unit comprising a number of product conveyor members which can vary according to the number of products P forming each group G. Each grip unit 22 comprises two end product conveyor elements designated by the references 24 and 28 and one or more intermediate product conveyor elements 26 positioned between the end elements 24, 28.

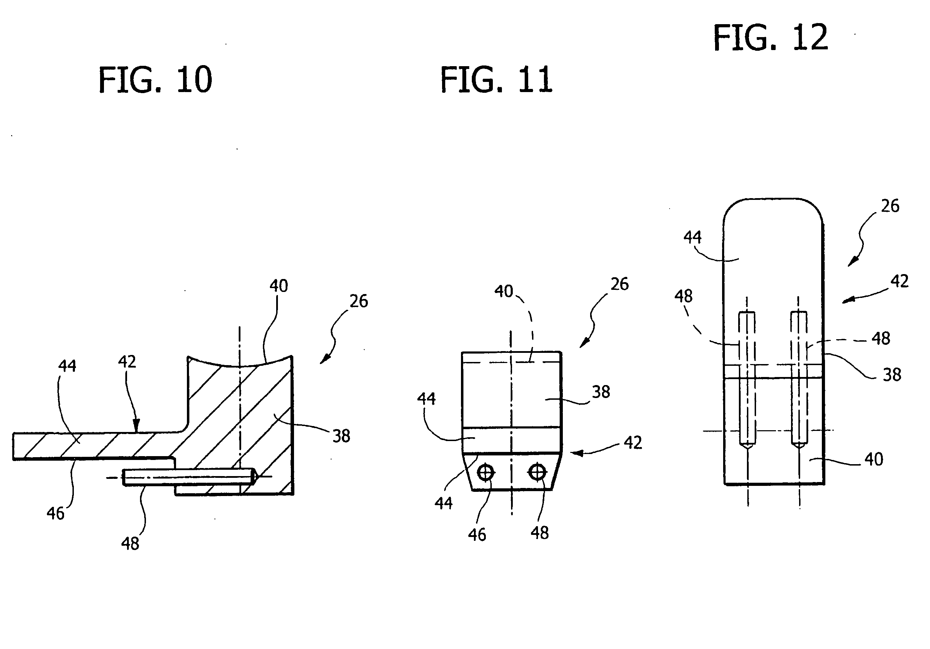

With reference to Figures 10, 11, and 12, each intermediate product conveyor element 26 comprises a body 38 preferably made of plastic material having a bearing surface for the products 40. In the illustrated example, the bearing surface for the products 40 has a concave shape with a diameter that is substantially equal to the diameter of the products, in order to maximise the contact area between the products P and the bearing surface 40. Each conveyor element 26 has a connecting portion 42 so shaped as to establish a sliding coupling with the flexible conveyor member 16. The connecting portion 42 comprises a wall 44, integral with the body 38 and having a flat surface 46. The connecting portion 42 further comprises a pair of pivot pins 48 whose longitudinal axes are mutually parallel and parallel to the surface 46. The distance between the axes of the pivot pins 48 is equal to the pitch between the transverse grooves 20 of the flexible conveyor member 16 or to a multiple of said pitch.

With reference to Figures 2 and 3, the pivot pins 48 are inserted into respective transverse grooves 20. Each pivot pin is positioned between the lower surface of the respective groove 20 and the lower surface of the support wall 32. The wall 44 is inserted between the outer surface of the flexible conveyor member 16 and the containment wall 34 or 36. The surface of the wall 44 is in contact with the flat outer surface of the flexible conveyor member 16. The distance between the pivot pins 48 and the surface 46 of each product conveyor element 26 is determined in such a way as to obtain a sliding coupling with the flexible conveyor member 16, i.e. a coupling with such a tolerance as to enable to insert and remove the product conveyor element 26 manually and without tools.

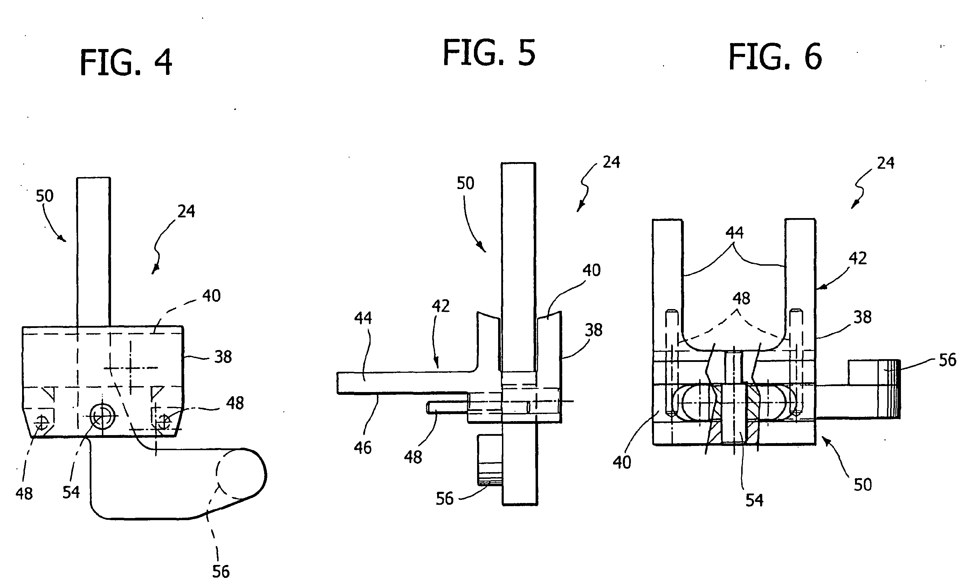

With reference to Figures 4-6 and 7-9, the end product conveyor elements 24 and 28 are provided, as the intermediate product conveyor elements 26, with a product bearing surface 40 and with a connecting portion 42 having a pair of pivot pins 48. The wall 44 of the connecting portion 42 has a U shape with two parallel branches positioned in correspondence with the pivot pins 48.

The end product conveyor elements 24 and 28 are provided with respective product containment members 50, 52. With reference to Figures 4 through 6, the containment member 50 of the product conveyor element 24 is formed by a substantially L shaped lever articulated to the body 38 of the product conveyor element 24 around a pivot pin 54 placed in an intermediate position between the pivot pins 48. The containment member 50 is preferably provided at one of its ends with an actuating portion 56 which engages a stationary cam (not illustrated) extending along the path of the flexible conveyor element 16, which commands the motion of the containment organ 56 between a position of containment and a position of release of the products.

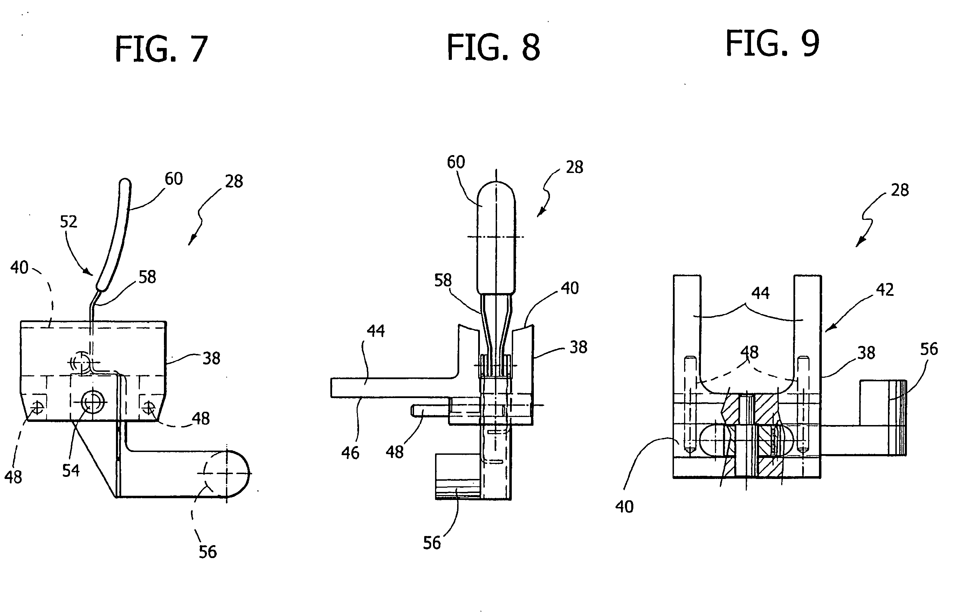

With reference to Figures 7 through 9, the containment member 52 of the product conveyor element 28 is constructed similarly to the containment member 50, except that the upper branch 58 of the containment member 52 is elastically deformable in order to apply to the group of products G an elastic force which tends to maintain the products P in contact with each other in the direction of mutual approach. The upper branch 58 of the containment member 52 can be constructed in the form of a pin spring with a plastic coating 60 on the surface in contact with the products.

With reference to Figure 3, the conveyor device 10 further comprises a lateral containment wall 62 removably fastened to the stationary support structure 14. The wall 62 forms a lateral stop that during operation prevents the disengagement of the product conveyor elements 24, 26, 28 from the flexible conveyor member 16.

To clean the conveyor device 10, it is necessary to remove the lateral containment wall 62, whereupon the product conveyor elements 24, 26, 28 can be removed manually. Said elements can be washed in a rotating drum washing machine or similar washing apparatus. After removing the product conveyor elements 24, 26, 28, the stationary support structure 14 and the flexible conveyor member are washed, e.g. by means of jet cleaners.

It is readily apparent that the conveyor device according to the present invention can be adapted very rapidly to group of products with different format simply by varying the number of the intermediate product conveyor element 26 or replacing the product conveyor elements with conveyor elements having different shape and dimensions, suitable to the new group of products.

Naturally, the conveyor device according to the invention may be subject to numerous variants from what is described and illustrated herein. For example, the fastening portion 42 of the product conveyor elements 24, 26, 28 may assume a different shape according to the type of flexible conveyor member 16 used. The pivot pins 48 of the fastening portion 42 are advantageous in particular for engagement with toothed belts and they could be replaced with differently shaped engagement elements if the flexible conveyor member 16 were constituted by a strip or a chain.

## Claims

1. A conveyor device comprising a flexible conveyor member (16) capable of advancing in a given direction of conveyance and product conveyor elements (24, 26, 28) associated to the flexible conveyor member (16) to act in conveying relationship with the products in said given direction, wherein said conveyor elements (24, 26, 28) can be selectively engaged and disengaged with respect to said flexible conveyor member (16) in a plug and socket relationship, **characterised in that** said product conveyor elements (24, 26, 28) can be engaged and disengaged with respect to said flexible conveyor member (16) by sliding in a direction of insertion and removal (30) and **in that** in the coupled condition said product conveyor elements (24, 26, 28) are fastened to the flexible conveyor member (16) in every direction orthogonal to the direction of insertion and removal (30) and are free to move away from the flexible conveyor member (16) in the direction of removal (30).

2. Conveyor device as claimed in claim 1, **characterised in that** said flexible conveyor member (16) comprises a plurality of engagement formations (20), so that said conveyor elements (24, 26, 28) can be coupled to said flexible conveyor member (16) in a plurality of different engagement positions.

3. Conveyor device as claimed in claim 2, **characterised in that** said plurality of engagement formations (20) are distributed in substantially uniform fashion along the development of said flexible conveyor member (16).

4. Conveyor device as claimed in claim 3, **characterised in that** said plurality of engagement formations (20) form along the development of said flexible conveyor member (16) a continuity of different engagement positions for said conveyor elements (24, 26, 28).

5. Conveyor device as claimed in any of the previous claims, **characterised in that** said plug and socket engagement relationship is achieved by means of cavities (20) and pin formations (48) able to be engaged in said cavities (20).

6. Conveyor device as claimed in claim 5, **characterised in that** said cavities (20) are provided on said flexible conveyor member (16), whilst said pivot pin formations (48) able to be engaged in said cavities (20) are provided on said conveyor elements (24, 26, 28).

7. Conveyor device as claimed in claim 6, **characterised in that** said flexible conveyor member (16) is a toothed structure and said cavities (20) are separation cavities between teeth of said toothed structure.

8. Conveyor device as claimed in claim 6, **characterised in that** said flexible transport member (16) is a toothed belt.

9. Conveyor device as claimed in any of the previous claims, **characterised in that** said conveyor elements (24, 26, 28) can be selectively engaged and disengaged with respect to said flexible conveyor member (16) in friction sliding conditions.

10. Conveyor device as claimed in claim 1, **characterised in that** said direction of insertion and removal (30) is transverse relative to said direction of conveyance.

11. Conveyor device as claimed in claim 1, **characterised in that** it comprises a plurality of grip units (22) distanced from each other along the flexible conveyor member (16), said grip units being able to receive and hold respective groups (G) of products (P); said grip units (22) being modular units comprising a product conveyor elements (24, 26, 28).

12. Conveyor device as claimed in claim 11, **characterised in that** said grip units (22) comprise at least one end product conveyor element (24, 28) provided with a respective product containment member (50, 52) and at least one product conveyor element (26).

13. Conveyor device as claimed in claim 12, **characterised in that** said containment member (50, 52) is movable between a position of containment and a position of release of the products (P) and it is provided with a cam-actuated actuating member (56).

14. Conveyor device as claimed in claim 12 or claim 13, **characterised in that** said grip units (22) comprise two end product conveyor elements (24, 28) provided with respective product containment members (50, 52) and at least one product conveyor element (26) interposed between two end conveyor elements (24, 28).

15. Conveyor device as claimed in any of the previous claims, **characterised in that** said product conveyor elements (24, 26, 28) comprise a product bearing surface (40) and a connection portion (42) able to establish a sliding coupling with the flexible conveyor member (16).

16. Conveyor device as claimed in any of the previous claims, **characterised in that** said product conveyor elements (24, 26, 28) are provided with two pivot pins (48) with mutually parallel distanced axes, able to be engaged in the manner of a plug in said flexible conveyor member (16).

17. Conveyor device as claimed in any of the previous claims, **characterised in that** said product conveyor elements (24, 26, 28) comprise a flat surface (46) capable of being placed in contact with an outer flat surface of the flexible conveyor member (16).

18. Conveyor element (24, 26, 28) for conveyor device comprising a flexible conveyor member (16) capable of advancing in a given direction of conveyance, said conveyor element being able to be associated to the flexible conveyor member (16) to act in conveying relationship with the products in said given direction, wherein said conveyor elements (24, 26, 28) can be selectively engaged and disengaged with respect to said flexible conveyor member (16) in a plug and socket relationship, **characterised in that** the conveyor element (24, 26, 28) can be engaged and disengaged with respect to said flexible conveyor member (16) by sliding in a direction of insertion and removal (30) and **in that**, in the coupled condition, said product conveyor element (24, 26, 28) is fastened to the flexible conveyor member (16) in every direction orthogonal to the direction of insertion and removal (30) and is free to move away from the flexible conveyor member (16) in the direction of removal (30).

19. Conveyor element (24, 26, 28) as claimed in claim 18, **characterised in that** it is provided with at least one plug and socket engagement formation selected in the group comprising a cavity (20) and a pivot pin formation (48) able to be engaged in a cavity (20).

20. Conveyor element (24, 26, 28) as claimed in claim 19, **characterised in that** it is provided with at least one plug and socket engagement formation constituted by a pivot pin formation (48) able to be engaged in a cavity (20).

21. Conveyor element (24, 26, 28) as claimed in any of the claims 18 through 20, **characterised in that** it can be selectively engaged and disengaged with respect to said flexible conveyor member (16) in friction sliding conditions.

22. Conveyor element (24, 26, 28) as claimed in claim 21, **characterised in that** said direction of insertion and removal (30) is transverse relative to said direction of conveyance.

23. Conveyor element (24, 26, 28) as claimed in any of the claims 18 through 22, **characterised in that** it is comprised in an assortment of conveyor elements usable to obtain a modular grip unit (22) with conveyor elements of the assortment (24, 26, 28) and able to receive and retain respective groups (G) of products (P) on said flexible conveyor member (16).

24. Conveyor element (24, 26, 28) as claimed in claim 23, **characterised in that** said assortment to obtain said grip units (22) comprises at least one end product conveyor element (24, 28) provided with a respective product containment member (50, 52) and at least one product conveyor element (26).

25. Conveyor element as claimed in claim 24, **characterised in that** said containment member (50, 52) is movable between a position of containment and a position of release of the products (P) and it is provided with a cam-actuated actuating member (56).

26. Conveyor element as claimed in either one of the claims 24 or 25, **characterised in that** said assortment to obtain said grip units (22) comprises two end product conveyor elements (24, 28) provided with respective product containment members (50, 52) and at least one product conveyor element (26) interposed between two end conveyor elements (24, 28).

27. Conveyor element as claimed in any of the previous claims 18 through 26, **characterised in that** it comprises a product bearing surface (40) and a connection portion (42) able to establish a sliding coupling with the flexible conveyor member (16).

28. Conveyor element as claimed in any of the previous claims 18 through 27, **characterised in that** it is provided with two pivot pins (48) with mutually parallel distanced axes, able to be engaged in the manner of a plug in said flexible conveyor member (16).

29. Conveyor element as claimed in any of the claims 18 through 28, **characterised in that** it comprises a flat surface (46) capable of being placed in contact with an outer flat surface of said flexible conveyor member (16).

## Patentansprüche

1. Fördervorrichtung, die ein flexibles Förderglied (16), das sich in eine vorgegebene Förderrichtung vorwärts bewegen kann, und Produktförderelemente (24, 26, 28), die mit dem flexiblen Förderglied (16) verbunden sind, um in fördernder Beziehung mit den Produkten in die vorgegebene Richtung zu wirken, umfasst, wobei die Förderelemente (24, 26, 28) in Bezug auf das flexible Förderglied (16) in einer Steckverbindungs-Beziehung selektiv in Eingriff und außer Eingriff gebracht werden können, **dadurch gekennzeichnet, dass** die Produktförderelemente (24, 26, 28) in Bezug auf das flexible Förderglied (16) durch Gleiten in eine Richtung des Einfügens und Entfernens (30) in Eingriff und außer Eingriff gebracht werden können und dass die Produktförderelemente (24, 26, 28) in dem gekoppelten Zustand in jeder Richtung orthogonal zu der Richtung des Einfügens und Entfernens (30) an dem flexiblen Förderglied (16) befestigt sind und sich in die Richtung des Entfernens (30) frei von dem flexiblen Förderglied (16) wegbewegen können.

2. Fördervorrichtung nach Anspruch 1, **dadurch gekennzeichnet, dass** das flexible Förderglied (16) eine Vielzahl von Eingriffsformationen (20) umfasst, so dass die Förderelemente (24, 26, 28) in einer Vielzahl unterschiedlicher Eingriffspositionen mit dem flexiblen Förderglied (16) gekoppelt werden können.

3. Fördervorrichtung nach Anspruch 2, **dadurch gekennzeichnet, dass** die Vielzahl von Eingriffsformationen (20) auf eine im Wesentlichen einheitliche Weise entlang der Entwicklung des flexiblen Förderglieds (16) verteilt sind.

4. Fördervorrichtung nach Anspruch 3, **dadurch gekennzeichnet, dass** die Vielzahl von Eingriffsformationen (20) entlang der Entwicklung des flexiblen Förderglieds (16) eine Kontinuität unterschiedlicher Eingriffspositionen für die Förderelemente (24, 26, 28) bilden.

5. Fördervorrichtung nach einem der vorhergehenden Ansprüche, **dadurch gekennzeichnet, dass** die Steckverbindungseingriffs-Beziehung mit Hilfe von Vertiefungen (20) und Zapfenformationen (48), die in den Vertiefungen (20) in Eingriff gebracht werden können, erreicht wird

6. Fördervorrichtung nach Anspruch 5, **dadurch gekennzeichnet, dass** die Vertiefungen (20) an dem flexiblen Förderglied (16) bereitgestellt werden, während die Drehzapfenformationen (48), die in den Vertiefungen (20) in Eingriff gebracht werden können, an den Förderelementen (24, 26, 28) bereitgestellt werden.

7. Fördervorrichtung nach Anspruch 6, **dadurch gekennzeichnet, dass** das flexible Förderglied (16) eine gezahnte Struktur ist und die Vertiefungen (20) Trennvertiefungen zwischen Zähnen der gezahnten Struktur sind.

8. Fördervorrichtung nach Anspruch 6, **dadurch gekennzeichnet, dass** das flexible Transportglied (16) ein Zahnriemen ist.

9. Fördervorrichtung nach einem der vorhergehenden Ansprüche, **dadurch gekennzeichnet, dass** die Förderelemente (24, 26, 28) in Bezug auf das flexible Förderglied (16) unter Reibgleitbedingungen selektiv in Eingriff und außer Eingriff gebracht werden können

10. Fördervorrichtung nach Anspruch 1, **dadurch gekennzeichnet, dass** die Richtung des Einfügens und Entfernens (30) relativ zu der Förderrichtung quer ist.

11. Fördervorrichtung nach Anspruch 1, **dadurch gekennzeichnet, dass** sie eine Vielzahl von Greifeinheiten (22) umfasst, die entlang dem flexiblen Förderglied (16) voneinander beabstandet sind, wobei die Greifeinheiten jeweilige Gruppen (G) von Produkten (P) aufnehmen und halten können; wobei die Greifeinheiten (22) modulare Einheiten sind, die Produktförderelemente (24, 26, 28) umfassen.

12. Fördervorrichtung nach Anspruch 11, **dadurch gekennzeichnet, dass** die Greifeinheiten (22) wenigstens ein Produktförderendelement (24, 28), das mit einem jeweiligen Produktbeinhaltungsglied (50, 52) versehen ist, und wenigstens ein Produktförderelement (26) umfassen.

13. Fördervorrichtung nach Anspruch 12, **dadurch gekennzeichnet, dass** das Beinhaltungsglied (50, 52) zwischen einer Position der Beinhaltung und einer Position der Freigabe der Produkte (P) bewegt werden kann und mit einem nockenbetätigten Betätigungsglied (56) versehen ist.

14. Fördervorrichtung nach Anspruch 12 oder Anspruch 13, **dadurch gekennzeichnet, dass** die Greifeinheiten (22) zwei Endproduktförderendelemente (24, 28), die mit jeweiligen Produktbeinhaltungsgliedern (50, 52) versehen sind, und wenigstens ein Produktförderelement (26), das zwischen zwei Förderendelementen (24, 28) eingefügt ist, umfassen.

15. Fördervorrichtung nach einem der vorhergehenden Ansprüche, **dadurch gekennzeichnet, dass** die Produktförderelemente (24, 26, 28) eine Produkttragfläche (40) und einen Verbindungsabschnitt (42), der eine Gleitkopplung mit dem flexiblen Förderglied (16) herstellen kann, umfassen.

16. Fördervorrichtung nach einem der vorhergehenden Ansprüche, **dadurch gekennzeichnet, dass** die Produktförderelemente (24, 26, 28) mit zwei Drehzapfen (48) mit gegenseitig parallel beabstandeten Achsen versehen sind, die in der Art eines Steckers in dem flexiblen Förderglied (16) in Eingriff gebracht werden können.

17. Fördervorrichtung nach einem der vorhergehenden Ansprüche, **dadurch gekennzeichnet, dass** die Produktförderelemente (24, 26, 28) eine ebene Fläche (46) umfassen, die in Kontakt mit einer ebenen Außenfläche des flexiblen Förderglieds (16) platziert werden kann.

18. Förderelement (24, 26, 28) für Fördervorrichtung, die ein flexibles Förderglied (16) umfasst, das sich in eine vorgegebene Förderrichtung vorwärts bewegen kann, wobei das Förderelement mit dem flexiblen Förderglied (16) verbunden werden kann, um in fördernder Beziehung mit den Produkten in die vorgegebene Richtung zu wirken, wobei die Förderelemente (24, 26, 28) in Bezug auf das flexible Förderglied (16) in einer Steckverbindungs-Beziehung selektiv in Eingriff und außer Eingriff gebracht werden können, **dadurch gekennzeichnet, dass** das Förderelement (24, 26, 28) in Bezug auf das flexible Förderglied (16) durch Gleiten in eine Richtung des Einfügens und Entfernens (30) in Eingriff und außer Eingriff gebracht werden kann und dass das Produktförderelement (24, 26, 28) in dem gekoppelten Zustand in jeder Richtung orthogonal zu der Richtung des Einfügens und Entfernens (30) an dem flexiblen Förderglied (16) befestigt ist und sich in die Richtung des Entfernens (30) frei von dem flexiblen Förderglied (16) wegbewegen kann.

19. Förderelement (24, 26, 28) nach Anspruch 18, **dadurch gekennzeichnet, dass** es mit wenigstens einer Steckverbindungseingriffs-Formation versehen ist, die aus der Gruppe ausgewählt wird, die eine Vertiefung (20) und eine Drehzapfenformation (48), die in einer Vertiefung (20) in Eingriff gebracht werden kann, umfasst.

20. Förderelement (24, 26, 28) nach Anspruch 19, **dadurch gekennzeichnet, dass** es mit wenigstens einer Steckverbindungseingriffs-Formation versehen ist, die durch eine Drehzapfenformation (48), die in einer Vertiefung (20) in Eingriff gebracht werden kann, gebildet wird.

21. Förderelement (24, 26, 28) nach einem der Ansprüche 18 bis 20, **dadurch gekennzeichnet, dass** es in Bezug auf das flexible Förderglied (16) unter Reibgleitbedingungen selektiv in Eingriff und außer Eingriff gebracht werden kann.

22. Förderelement (24, 26, 28) nach Anspruch 21, **dadurch gekennzeichnet, dass** die Richtung des Einfügens und Entfernens (30) relativ zu der Förderrichtung quer ist.

23. Förderelement (24, 26, 28) nach einem der Ansprüche 18 bis 22, **dadurch gekennzeichnet, dass** es in einem Satz von Förderelementen enthalten ist, die verwendet werden können, um eine modulare Greifeinheit (22) mit Förderelementen des Satzes (24, 26, 28) zu erzielen, und jeweilige Gruppen (G) von Produkten (P) auf dem flexiblen Förderglied (16) aufnehmen und halten können.

24. Förderelement (24, 26, 28) nach Anspruch 23, **dadurch gekennzeichnet, dass** der Satz zum Erzielen der Greifeinheiten (22) wenigstens ein Produktförderendelement (24, 28), das mit einem jeweiligen Produktbeinhaltungsglied (50, 52) versehen ist, und wenigstens ein Produktförderelement (26) umfasst.

25. Förderelement nach Anspruch 24, **dadurch gekennzeichnet, dass** das Beinhaltungsglied (50, 52) zwischen einer Position der Beinhaltung und einer Position der Freigabe der Produkte (P) bewegt werden kann und es mit einem nockenbetätigten Betätigungsglied (56) versehen ist.

26. Förderelement nach einem der Ansprüche 24 oder 25, **dadurch gekennzeichnet, dass** der Satz zum Erzielen der Greifeinheiten (22) zwei Produktförderendelemente (24, 28), die mit jeweiligen Produktbeinhaltungsgliedern (50, 52) versehen sind, und wenigstens ein Produktförderelement (26), das zwischen zwei Förderendelementen (24, 28) eingefügt ist, umfasst

27. Förderelement nach einem der vorhergehenden Ansprüche 18 bis 26, **dadurch gekennzeichnet, dass** es eine Produkttragfläche (40) und einen Verbindungsabschnitt (42), der eine Gleitkopplung mit dem flexiblen Förderglied (16) herstellen kann, umfasst.

28. Förderelement nach einem der vorhergehenden Ansprüche 18 bis 27, **dadurch gekennzeichnet, dass** es mit zwei Drehstiften (48) mit gegenseitig parallel beabstandeten Achsen versehen ist, die in der Art eines Steckers mit dem flexiblen Förderglied (16) in Eingriff gebracht werden können.

29. Förderelement nach einem der vorhergehenden Ansprüche 18 bis 28, **dadurch gekennzeichnet, dass** es eine ebene Fläche (46) umfasst, die in Kontakt mit einer ebenen Außenfläche des flexiblen Förderglieds (16) platziert werden kann.

## Revendications

1. Dispositif de convoyeur comprenant un élément de convoyeur flexible (16) capable d'avancer dans une direction donnée de transport et des éléments de convoyeur de produits (24, 26, 28) associés à l'élément de convoyeur flexible (16) pour agir selon une relation de transport avec les produits dans ladite direction donnée, dans lequel lesdits éléments de convoyeur (24, 26, 28) peuvent être sélectivement mis en prise et dégagés par rapport audit élément de convoyeur flexible (16) selon une relation de prises mâle et femelle, **caractérisé en ce que** lesdits éléments de convoyeur de produits (24, 26, 28) peuvent être mis en prise et dégagés par rapport audit élément de convoyeur flexible (16) en coulissant dans une direction d'insertion et de retrait (30) et **en ce que** dans la condition couplée, lesdits éléments de convoyeur de produits (24, 26, 28) sont fixés sur l'élément de convoyeur flexible (16) dans chaque direction orthogonale à la direction de l'insertion et du retrait (30) et sont libres de s'éloigner de l'élément de convoyeur flexible (16) dans la direction du retrait (30).

2. Dispositif de convoyeur selon la revendication 1, **caractérisé en ce que** ledit élément de convoyeur flexible (16) comprend une pluralité de formations de mise en prise (20), de sorte que lesdits éléments de convoyeur (24, 26, 28) peuvent être couplés audit élément de convoyeur flexible (16) dans une pluralité de positions de mise en prise différentes.

3. Dispositif de convoyeur selon la revendication 2, **caractérisé en ce que** ladite pluralité de formations de mise en prise (20) sont réparties d'une manière sensiblement uniforme le long du développement dudit élément de convoyeur flexible (16).

4. Dispositif de convoyeur selon la revendication 3, **caractérisé en ce que** ladite pluralité de formations de mise en prise (20) forme le long du développement dudit élément de convoyeur flexible (16) une continuité de positions de mise en prise différentes pour lesdits éléments de convoyeur (24, 26, 28).

5. Dispositif de convoyeur selon l'une quelconque des revendications précédentes, **caractérisé en ce que** ladite relation de mise en prise de prises mâle et femelle est obtenue au moyen de cavités (20) et de formations de broche (48) pouvant être mises en prise dans lesdites cavités (20).

6. Dispositif de convoyeur selon la revendication 5, **caractérisé en ce que** lesdites cavités (20) sont prévues sur ledit élément de convoyeur flexible (16), alors que lesdites formations de broche de pivot (48) pouvant être mises en prise dans lesdites cavités (20) sont prévues sur lesdits éléments de convoyeur (24, 26, 28).

7. Dispositif de convoyeur selon la revendication 6, **caractérisé en ce que** ledit élément de convoyeur flexible (16) est une structure dentée et lesdites cavités (20) sont des cavités de séparation entre les dents de ladite structure dentée.

8. Dispositif de convoyeur selon la revendication 6, **caractérisé en ce que** ledit élément de transport flexible (16) est une courroie dentée.

9. Dispositif de convoyeur selon l'une quelconque des revendications précédentes, **caractérisé en ce que** lesdits éléments de convoyeur (24, 26, 28) peuvent être sélectivement mis en prise et dégagés par rapport auxdits éléments de convoyeurs flexibles (16) dans des conditions de coulissement par frottement.

10. Dispositif de convoyeur selon la revendication 1, **caractérisé en ce que** ladite direction d'insertion et de retrait (30) est transversale par rapport à ladite direction de transport.

11. Dispositif de convoyeur selon la revendication 1, **caractérisé en ce qu'**il comprend une pluralité d'unités de préhension (22) à distance les unes des autres le long de l'élément de convoyeur flexible (16), lesdites unités de préhension pouvant recevoir et maintenir des groupes (G) respectifs de produit (P) ; lesdites unités de préhension (22) étant des unités modulaires comprenant des éléments de convoyeur de produits (24, 26, 28).

12. Dispositif de convoyeur selon la revendication 11, **caractérisé en ce que** lesdites unités de préhension (22) comprennent au moins un élément de convoyeur de produits d'extrémité (24, 28) prévu avec un élément de confinement de produits (50, 52) respectif et au moins un élément de convoyeur de produits (26).

13. Dispositif de convoyeur selon la revendication 12, **caractérisé en ce que** ledit élément de confinement (50, 52) est mobile entre une position de confinement et une position de libération des produits (P) et est prévu avec un élément d'actionnement (56) actionné par came.

14. Dispositif de convoyeur selon la revendication 12 ou la revendication 13, **caractérisé en ce que** lesdites unités de préhension (22) comprennent deux éléments de convoyeur de produits d'extrémité (24, 28) dotés des éléments de confinement de produits (50, 52) respectifs et au moins un élément de convoyeur de produits (26) intercalé entre les deux éléments de convoyeur d'extrémité (24, 28).

15. Dispositif de convoyeur selon l'une quelconque des revendications précédentes, **caractérisé en ce que** lesdits éléments de convoyeur de produits (24, 26, 28) comprennent une surface d'appui de produits (40) et une partie de raccordement (42) capable d'établir un couplage coulissant avec l'élément de convoyeur flexible (16).

16. Dispositif de convoyeur selon l'une quelconque des revendications précédentes, **caractérisé en ce que** lesdits éléments de convoyeur de produits (24, 26, 28) sont dotés de deux broches de pivot (48) avec des axes espacés mutuellement parallèles, pouvant être mis en prise à la manière d'une prise mâle dans ledit élément de convoyeur flexible (16).

17. Dispositif de convoyeur selon l'une quelconque des revendications précédentes, **caractérisé en ce que** lesdits éléments de convoyeur de produits (24, 26, 28) comprennent une surface plate (46) capable d'être placée en contact avec une surface plate externe de l'élément de convoyeur flexible (16).

18. Elément de convoyeur (24, 26, 28) pour le dispositif de convoyeur comprenant un élément de convoyeur flexible (16) capable d'avancer dans une direction de transport donnée, ledit élément de convoyeur pouvant être associé à l'élément de convoyeur flexible (16) pour agir selon une relation de transport avec les produits dans ladite direction donnée, dans lequel lesdits éléments de convoyeur (24, 26, 28) peuvent être mis en prise et dégagés sélectivement par rapport audit élément de convoyeur flexible (16) selon une relation de prises mâle et femelle, **caractérisé en ce que** l'élément de convoyeur (24, 26, 28) peut être mis en prise et dégagé par rapport audit élément de convoyeur flexible (16) en coulissant dans une direction d'insertion et de retrait (30) et **en ce que**, dans la condition couplée, ledit élément de convoyeur de produits (24, 26, 28) est fixé sur l'élément de convoyeur flexible (16) dans chaque direction orthogonale à la direction d'insertion et de retrait (30) et est libre de s'éloigner de l'élément de convoyeur flexible (16) dans la direction du retrait (30).

19. Elément de convoyeur (24, 26, 28) selon la revendication 18, **caractérisé en ce qu'**il est doté d'au moins une formation de mise en prise de prises mâle et femelle choisie dans le groupe comprenant une cavité (20) et une formation de broche de pivot (48) pouvant être mise en prise dans une cavité (20).

20. Elément de convoyeur (24, 26, 28) selon la revendication 19, **caractérisé en ce qu'**il est doté d'au moins une formation de mise en prise de prises mâle et femelle constituée par une formation de broche de pivot (48) pouvant être mise en prise dans une cavité (20).

21. Elément de convoyeur (24, 26, 28) selon l'une quelconque des revendications 18 à 20, **caractérisé en ce qu'**il peut être sélectivement mis en prise et dégagé par rapport audit élément de convoyeur flexible (16) dans des conditions de coulissement par frottement.

22. Elément de convoyeur (24, 26, 28) selon la revendication 21, **caractérisé en ce que** ladite direction d'insertion et de retrait (30) est transversale par rapport à la direction de transport.

23. Elément de convoyeur (24, 26, 28) selon l'une quelconque des revendications 18 à 22, **caractérisé en ce qu'**il est composé d'un assortiment d'éléments de convoyeur pouvant être utilisé pour obtenir une unité de préhension modulaire (22) avec les éléments de convoyeur de l'assortiment (24, 26, 28) et pouvant recevoir et retenir des groupes (G) respectifs de produits (P) sur ledit élément de convoyeur flexible (16).

24. Elément de convoyeur (24, 26, 28) selon la revendication 23, **caractérisé en ce que** ledit assortiment pour obtenir lesdites unités de préhension (22) comprend au moins un élément de convoyeur de produits d'extrémité (24, 28) doté d'un élément de confinement de produits (50, 52) respectif et au moins un élément de convoyeur de produits (26).

25. Elément de convoyeur selon la revendication 24, **caractérisé en ce que** ledit élément de confinement (50, 52) est mobile entre une position de confinement et une position de libération des produits (P) et est doté d'un élément d'actionnement (56) actionné par came.

26. Elément de convoyeur selon l'une quelconque des revendications 24 ou 25, **caractérisé en ce que** ledit assortiment pour obtenir lesdites unités de préhension (22) comprend deux éléments de convoyeur de produits d'extrémité (24, 28) doté d'éléments de confinement de produits (50, 52) respectifs et au moins un élément de convoyeur de produits (26) intercalé entre les deux éléments de convoyeur d'extrémité (24, 28).

27. Elément de convoyeur selon l'une quelconque des revendications 18 à 26 précédentes, **caractérisé en ce qu'**il comprend une surface d'appui de produit (40) et une partie de raccordement (42) pouvant établir un couplage coulissant avec l'élément de convoyeur flexible (16).

28. Elément de convoyeur selon l'une quelconque des revendications 18 à 27 précédentes, **caractérisé en ce qu'**il est doté de deux broches de pivot (48) avec des axes espacés mutuellement parallèles, pouvant être mis en prise à la manière d'une prise mâle dans ledit élément de convoyeur flexible (16).

29. Elément de convoyeur selon l'une quelconque des revendications 18 à 28, **caractérisé en ce qu'**il comprend une surface plate (46) capable d'être placée en contact avec une surface plate externe dudit élément de convoyeur flexible (16).
